# EUROPEAN PATENT APPLICATION

(11) **EP 3 160 113 A1**
(43) Date of publication of application: **26.04.2017**
(21) Application number: 15191135.1
(22) Date of filing: 22.10.2015
(51) Int. Cl.: H04L 29/12, H04W 8/08

(54) **METHOD AND APPARATUS FOR ASSIGNING AN IP ADDRESS TO A USER EQUIPMENT OF A MOBILE NETWORK**

(71) Applicant: NTT DoCoMo, Inc., Tokyo (JP)
(72) Inventor: Kiess, Wolfgang, 80687 Munich (DE); Thakolsri, Srisakul, 80687 Munich (DE); Beker, Sergio, 80687 Munich (DE); Sama, Malla Reddy, 80687 Munich (DE)
(74) Representative: Betten & Resch

(57) **Abstract**

A method for assigning an IP address to a user equipment of a mobile network, said method comprising:
Sending a request to connect said user equipment to a first base station of said mobile network, wherein said first base station is connected to a backhaul network arranged in a certain physical topology;
maintaining for base stations in said mobile network a mapping between the physical location of a base station in the physical topology of said mobile network and a plurality of corresponding IP addresses, which may be assigned to a user equipment connected to said base station;
sending from said first base station a reply containing an IP address derived by said first base station based on said maintained mapping to said user equipment.

## Description

### FIELD OF INVENTION

The present invention relates to a method and an apparatus for assigning an IP address to a user equipment of a mobile network.

### BACKGROUND OF THE INVENTION

The current EPC (Evolved Packet Core) network provides two key features for all traffic that traverses it:
1. Mobility support in the form of IP addresses that do not change when a UE (user equipment) moves from one base station to another: a UE gets a single IP address by the network that is valid during the whole time the UE is attached to the network. When the UE moves from one base station (eNB) to another, the UE naturally changes its point of attachment and with this its location in the operator's backhaul transport network topology. However, the IP address stays the same. This is achieved by using the S- and P-GW (Serving Gateway and PDN Gateway) as mobility anchors and tunneling the packets for the UE to the eNB it is currently attached to.
2. **QoS support** in the form of different logical transmission channels (called bearers) that a UE can use to communicate over the mobile network. Each bearer has a set of QoS parameters associated to it. These determine the user plane treatment of the IP packets in the transport network. QoS parameters are e.g. *packet delay budget* or *maximum packet loss rate.* Also bearers are realized by utilizing the above-mentioned tunneling via S- and P-GW.

Most applications used by UEs in a mobile network, however, do not require mobility support and QoS support by means of bearers to work properly, as will be exemplified by some examples as follows:
- Video traffic:
   ∘ Mobility support: DASH is an example for a technique for video streaming, which fetches a video in several segments. A change of IP address does not affect the fetching of the next segment, thus while the first segments of a stream can be fetched via a first IP address, the video can still be played out even if further segments are fetched from another IP address. Thus, a stable IP address is not needed.
   ∘ QoS support: video applications often use buffering and thus do not need dedicated support for QoS: e.g. packet loss, packet reordering, or simple packet delays can be compensated via buffering techniques. Thus, dedicated QoS support from the network is not needed but can be compensated for at the application layer.
- While other types of traffic like HTTP or Email make up a smaller fraction of the overall traffic, also these applications can work well without dedicated QoS and mobility support: websites can be fetched in segments via HTTP, and the transmission of an email can be repeated in case the IP address of the UE changes. Furthermore, the above outlined typical QoS-degrading events do not much affect the user experience for these applications.

Therefore, a large fraction of traffic transported over a mobile network is produced and consumed by applications that can cope with a lack of QoS and mobility support: they either already implement appropriate mechanisms at the application layer, or can be easily adapted without affecting the user experience, or even just do not need such mechanisms in the first place.

However, the currently dominant mobile network, namely the EPC mobile network applies a "one size fits all" approach to the traffic it transports: every packet stream gets mechanisms for a) traffic differentiation and thus QoS support in the form of bearers and b) mobility support in the form of stable IP addresses, even if this is not needed by the application.

It is therefore desirable to provide a mobile network technology, which can cope with the problem of how to support such "best effort, no mobility traffic" (like HTTP, DASH video, email) in a mobile, cellular network based on the current 3GPP architecture. It would further be preferable if it would be able do this more efficiently than current EPC, by providing:
- Less overhead in data plane processing
- Less signaling effort

The related art described in the following section does not achieve this objective.

SIPTO (selective IP traffic offload, 3GPP TR 23.829) is a technique to transmit certain fractions of traffic directly from a base station (i.e. at or above RAN) to external packet data networks like the Internet, bypassing the EPC core network with this. While SIPTO mostly targets home eNBs (i.e. user installed femto cells), it can also be applied to macro eNBs as shown in **Fehler! Verweisquelle konnte nicht gefunden werden..** The figure shows the specified "solution 6" where an L-GW (local gateway) is placed right at the eNB. This L-GW coordinates with the eNB on the usage of the local breakout.

To use the SIPTO offloading function, the UE first has to connect to the EPC core network, i.e. establish a default bearer with S- and P-GW. In a second step, the UE establishes an additional packet data network connection. Only then, certain fractions of traffic can be offloaded via the LGW. In case the UE only wants to transmit "no mobility, no QoS" type of traffic, that is actually a waste of resources, as the default bearer that is established in this process is not needed.

Second, for certain cases, the offloading follows a principle where still a stable IP address is the goal: in case the UE is active at an eNB different from the one where the L-GW is co-located, traffic has to be forwarded through the extension tunnel to the core network, and from there via P-GW and S-GW towards the UE's new eNB. While this allows to deliver all packets to the UE, it still might not be necessary as applications can cope with lost packets. Thus, this tunneling as well as the necessary storing of packets and signaling wastes resources.

Third, the architecture as well as the signaling flows necessary to use SIPTO are more complex than a stand-alone EPC solution: architecture-wise, it requires an additional extension tunnel between L-GW and P-GW as shown in **Fehler! Verweisquelle konnte nicht gefunden werden..** From the signaling point of view, it can only be activated after a default bearer has been setup, thus requires two setup signaling sequences (one for default bearer activation, the other for activation of SIPTO). Finally, all signaling to activate SIPTO always involves S- and P-GW, thus putting additional signaling load on these entities.

To sum up, SIPTO solution 6 allows to directly forward traffic from an eNB towards the Internet and simplifies the data plane and thus partially addresses the outlined problem. However, it achieves this goal while at the same time increasing the complexity in architecture and signaling. Furthermore, as it is specified today, it does not allow for a "best effort, no mobility" connection only. This is especially problematic as for a large fraction of traffic such a connection is sufficient.

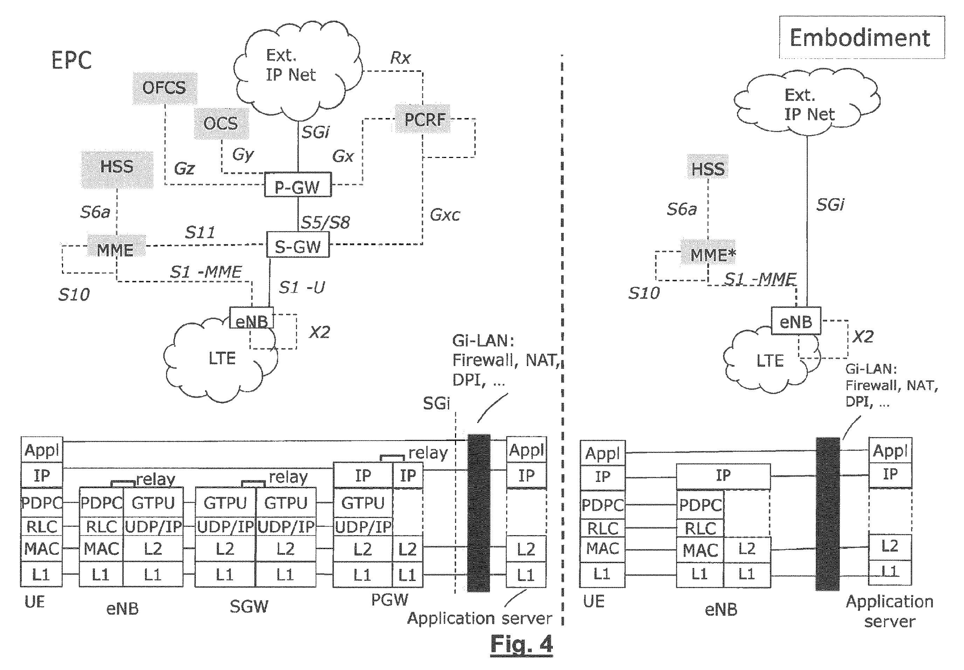

CSIPTO (see also 3GPP TR 22.828 Study on co-ordinated Packet data network GateWay (PGW) Change for Selected IP Traffic Offload (CSIPTO)) is a 3GPP SA1 Rel. 13 work item. One of the flavors of CSIPTO allows a UE to acquire two IP addresses, one that does not change during mobility and is anchored with a classical EPC, and another IP address that is locally anchored like in SIPTO. Closest to the idea of the present invention is "Use Case 3 - CSIPTO on-demand dual PDN connection", also shown in **Fehler! Verweisquelle konnte nicht gefunden werden.,** which shows Fig. 4.4.3-2 of TR22.828.

TR22.828 in this regard reads:
When the UE attempts to initiate a flow that does not require IP address preservation, that flow can be carried over the PDN connection with the LGW (see the left-hand dotted-line in Figure 4.4.3-1).
When the UE attempts to initiate a flow that requires IP address preservation, that flow shall not be carried over the SIPTO at LN (local network) PDN connection as that connection cannot ensure preservation of the IP address. So, the UE establishes an additional PDN connection with the same PDN but using a PGW this time. The new flow is carried over this new PDN connection (see the right-hand dotted-line Figure 4.4.3-2).

The default connection (illustrated by the line connecting UE and Remote End 1) runs via the LGW without IP address preservation, and an additional connection (illustrated by the line connecting UE and Remote End 2 via the right-hand dotted line) is only established upon demand. Even if there is disclosed a connection without mobility support, however, since CSIPTO is based on SIPTO, this is understood by the skilled person as being implemented using the SIPTO procedures, which then comes with the disadvantages outlined in the previous section such as the overhead created by the establishment of the tunnnel.

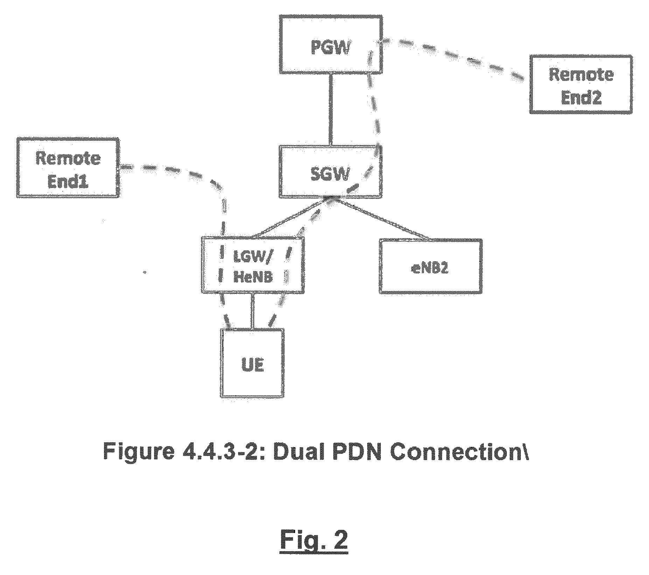

Furthermore, as will become apparent later from the detailed description of the embodiments of the invention, an embodiment of the present invention also covers the case of a handover between eNBs. In the other CSIPTO use cases (handover or mobility is not covered in the depicted use case 3 shown in Fig. 2), the PDN connection is deactivated with the old LGW and reactivated with the new LGW in case of mobility. Thus, the skilled person understands that this is also the solution for the discussed use case 3, which is, however, fundamentally different from the approach of embodiments of present invention, as will become apparent later from the detailed description, which does not perform any de- or reactivation, as will also become apparent from the description later.

Another related prior art is a WiFi based network that provides coverage in a certain area, e.g. a company, or a campus via multiple WiFi access points (APs). This, however, uses NAT for address translation, which means that the UE is not really assigned a topologically correct address and therefore is more remote from the present invention than SIPTO or CSIPTO, also because it does not establish a connection to a mobile network of a mobile network operator.

### SUMMARY OF THE INVENTION

According to one embodiment there is provided a method for assigning an IP address to a user equipment of a mobile network, said method comprising:
Sending a request to connect said user equipment to a first base station of said mobile network,
wherein said first base station is connected to a backhaul network arranged in a certain physical topology;
maintaining for base stations in said mobile network a mapping between the physical location of a base station in the physical topology of said mobile network and a plurality of corresponding IP addresses, which may be assigned to a user equipment connected to said base station;
sending from said first base station a reply containing an IP address derived by said first base station based on said maintained mapping to said user equipment.

In this manner a topologically correct IP address can be assigned to a UE. Moreover, the thus assigned IP address can be used for directly routing packets to the UE through the backhaul network. The connect request may be an ATTACH request to initially attach a UE to the base station, or it may be a handover request requesting a handover from another base station to said first base station.

According to one embodiment said request to connect comprises information that indicates that said assigned IP address should be assigned based on said mapping.

By this indication there isopened the possibility to implement a new network paradigm, which enables a distinction between connect requests which require a location dependent IP address and connect requests which don't requre a location dependent IP address. Thereby it becomes possible to provide location dependent IP adresses and corresponding mobility support only "on demand", with all the positive consequences which such an implementation has on network traffic and load.

According to one embodiment said request to connect comprises information that indicates that the connection should be made in a mode which does not maintain mobility support such that the IP address assigned to the user equipment will change during a handover.

By providing a connect request comprising information which indicates "no mobility support required" or "mobility support required" there is opened the possibility to enhance the prior art 3GPP network by an additional option for a "no mobility support" mode, which enables the provision of a different kind of traffic, which requires less signaling overhead.

According to one embodiment said request to connect comprises information that indicates whether the user equipment requests the connection to be made in a mode which maintains mobility support such that the IP address assigned to the UE will not change in case of a handover or whether the connection should be made in a mode which does not maintain mobility support such that the IP address assigned to the user equipment will change during a handover, wherein
in case no mobility support is requested the user equipment gets assigned an IP address corresponding to its location based on said mapping table.

By providing a connect request comprising information which indicates "no mobility support required" or "mobility support required" there is opened the possibility to enhance the prior art 3GPP network by an additional option for a "no mobility support" mode, which enables the provision of a different kind of traffic, which requires less signaling overhead.

According to one embodiment said request is a handover request which is sent from a second base station requesting a handover of said user equipment from said second base station to said first base station; and
said reply containing an IP address is sent from said first base station to said second base station, which then forwards said IP address to said user equipment.

This provides a handover procedure with no mobility support, i.e. where the IP address changes during the handover and is then still topologically correct after the handover.

According to one embodiment said IP address is derived by
sending from said first base station a signal to an IP address allocation unit, the signal containing location information such as the identifier of said first base station or the cell to which said user equipment is going to connect to, wherein
the IP address allocation unit is configured to maintain a mapping of said location information to a set of IP addresses it can assign to said location identified by said location information; selecting one of these IP addresses as said IP address to be assigned to said user equipment; transmitting from said IP address allocation unit said IP address to said first base station.

The provision of an IP address allocator as a separate network entity is a suitable approach to implement the capability to provide topologically correct IP addresses based on the location of the base station and the UE from which the request originates. The IP address allocator does not necessarily need to be in the form of a separate network entity, its function may also be integrated into an existing network entity such as a S-GW or a P-GW, which then need to be supplemented by the functions of the IP address allocator.

According to one embodiment said IP address is derived by: Based on a pre-allocated pool of IP addresses allocated to said first base station, said pool containing only IP addresses corresponding to the physical location of said first base station in said physical network topology; upon receiving the request for an IP address by said first base station, returning an IP address from said pool.

A pre-allocated pool of IP addresses maintained at the base station reduces the necessary traffic in case of an attach or handover request with an indication of "no mobility support"; because the base station may directly look up the IP address to be assigned in its pool.

According to one embodiment the method comprises: Classifying by a traffic classification function in said user equipment a part of or all traffic produced by this UE as best effort traffic; forwarding only the traffic, which has been classified as best effort traffic, using the IP address which has been assigned based on the location information. The traffic classification function may classify traffic e.g. based on the application that has produced it on the device, or by taking packet level information like IP address or port number into account.

This enables the user equipment to chose explicitly best effort traffic for his connection, and then the traffic will be routed through the network using the location dependent IP address without the overhead necessary for tunneling and QoS bearer establishment in the prior art.

According to one embodiment said method comprises:
when said user equipment receives said IP address from said second base station, changing an existing IP address to said newly assigned location dependent IP address;
transmitting all packets using said newly assigned location dependent IP address;
sending a handover complete message to said second base station.

This enables a handover implementation using the location dependent IP address.

According to one embodiment said method comprises:
sending information in said connect request sent from said user equipment or in said handover request to said first base station indicating that said user equipment wants to connect in a "best effort traffic" and "location dependent IP address" mode.

This enables the indication that the traffic to be routed through the connection to be established should be "best effort" traffic and that the IP address is assigned location dependent. In addition to the indication of no mobility support being required, the "best effort" indication indicates a further feature enabled by this approach, namely the best effort traffic for the established connection. The request for "best effort" traffic or "best effort" traffic mode thereby can also be made implicitly, e.g. by a lack of an indication of a QoS, or by an indication of "no mobility support" being requested, which may be interpreted as at the same time requesting "best effort traffic".

According to one embodiment said method comprises:
after the UE has obtained an IP address, the sending by the UE uplink packets towards the base station which are then routed via said backhaul network without GTP tunneling using IP routing, and/or
after the UE has obtained an IP address, the receiving by the UE downlink packets from the base station which are then routed via said backhaul network without GTP tunneling using IP routing.

Avoiding the tunneling and instead directly routing the packets through the backhaul network of the mobile operator using the location dependent IP address significantly reduces the signaling overhead necessary to establish and maintain the tunneling and furthermore reduces the per packet overhead.

According to one embodiment said method comprises:
Assigning to the UE that attaches to the first base station two IP addresses, one that is location dependent and changes during a handover for best effort traffic, and a different one that is stable during handover.

The provision of two IP addresses provides the capability of handling two kinds of traffic, on one hand "no mobility best effort" traffic without the overhead necessary for mobility support and QoS support, and at the same time traffic which maintains mobility support.

According to one embodiment said method comprises:
Providing an interface on the UE for requesting 'stable IP address' and/or 'more than best effort' traffic;
assigning in response to such a request an additional IP address by the network to the user equipment, which remains the same in case of a handover and/or activation of QoS bearers.

This enables an explicit choice for "more than best effort traffic" and/or "stable IP address", which means on the other hand the best effort traffic and no mobility support traffic may be implemented as default, while if a need for QoS or mobility support arises an additional IP address may be provided.

According to one embodiment the IP address assigned to said more than best effort traffic is not an IP address maintained in said mapping.

This avoids that the location dependent IP address, which cannot support tunneling and QoS, is used for the more than best effort traffic.

According to one embodiment said method comprises:
a. Forwarding an attach request sent from said user equipment to said first base station to an "authentication and authorization" (AA) unit,
b. said AA unit determining that said user equipment is subscribed to a "best effort, no mobility support" mode;
c. triggering the derivation of the location dependent IP address in said base station.

This enables the mode according to which the IP address is to be assigned (location dependent of mobility support) and the kind of traffic based on the subscription information of the UE. The "mobility support indication" in this case is contained in the subscription information of the UE and therefore is implicitly transmitted together with the connect request by identifying the UE and thereby its subscription mode.

According to one embodiment there is provided an apparatus for assigning an IP address to a user equipment of a mobile network, said apparatus comprising:
a module for sending a request to connect said user equipment to a first base station of said mobile network, wherein said first base station is connected to a backhaul network arranged in a certain physical topology;
a module for maintaining for base stations in said mobile network a mapping between the physical location of a base station in the physical topology of said mobile network and a plurality of corresponding IP addresses, which may be assigned to a user equipment connected to said base station;
a module for sending from said first base station a reply containing an IP address derived by said first base station based on said maintained mapping to said user equipment.

This provides an apparatus to implement an IP assigning approach according to an embodiment of the invention.

According to one embodiment there is provided an user equipment having assigned an IP address by a mobile network, said user equipment comprising:
a module for sending a request to connect said user equipment to a first base station of said mobile network, wherein said first base station is connected to a backhaul network arranged in a certain physical topology;
wherein said mobile network comprises a module for maintaining for base stations in said mobile network a mapping between the physical location of a base station in the physical topology of said mobile network and a plurality of corresponding IP addresses, which may be assigned to a user equipment connected to said base station;
wherein said first base station comprises a module for sending from said first base station a reply containing an IP address derived by said first base station based on said maintained mapping to said user equipment, and
said user equipment comprises a module for receiving said IP address from said first base station.

This provides a user equipment for implementing a connect request with a location dependent IP address according to an embodiment of the invention.

According to one embodiment there is provided an IP address allocator being an entity in a mobile network for assigning an IP address to a user equipment of said mobile network, wherein said mobile network comprises:
a module for receiving a request from a user equipment to connect said user equipment to a first base station of said mobile network, wherein said first base station is connected to a backhaul network of said mobile network arranged in a certain physical topology;
said IP address allocator comprising a module for maintaining for base stations in said mobile network a mapping between the physical location of a base station in the physical topology of said mobile network and a plurality of corresponding IP addresses, which may be assigned to a user equipment connected to said base station; and
a module for sending from said IP address allocator in response to said request from said user equipment a reply containing an IP address based on said maintained mapping.

This provides an entity in a mobile network, which enables the assignment of location dependent IP addresses to a user equipment.

According to embodiments of the invention the apparatus, user equipment or IP address allocator comprise further any of the features for implementing one of the other embodiments of the invention described before.

### DESCRIPTION OF THE DRAWINGS

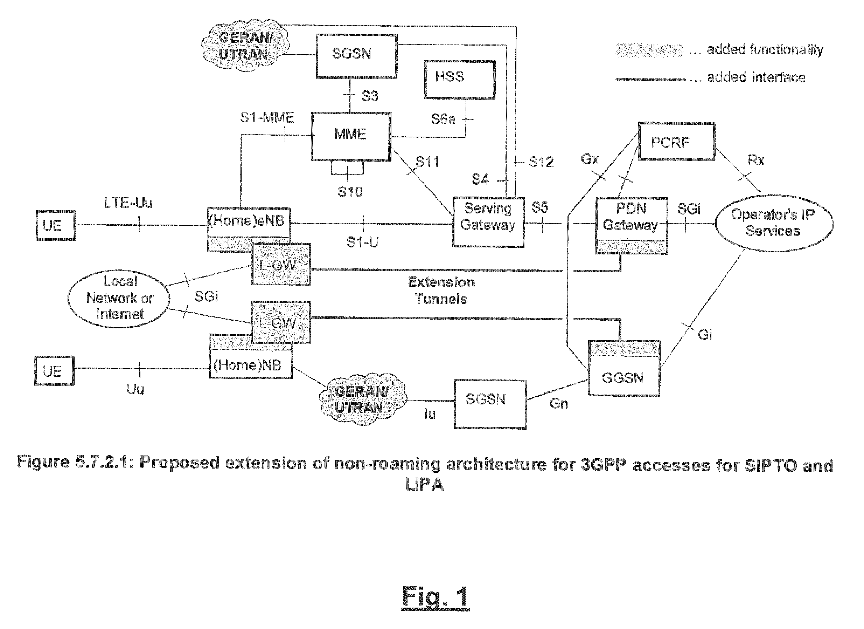

Figs. 1 and 2 illustrate network configurations according to the prior art.
Figs. 3 to 5 illustrate embodiments of the invention.
Fig. 6 shows a sequence diagram of an ATTACH procedure according to the prior art.
Fig. 7 and 8 illustrate ATTACH procedures according to embodiments of the invention.
Fig. 8 illustrates the configuration of an IP address pool in a base station according to an embodiment of the invention
Fig. 10 shows a handover according to the prior art.
Fig. 11 shows a sequence diagram of handover procedures according to embodiments of the invention.
Fig. 12 illustrates a system configuration according to an embodiment of the invention.

### DETAILED DESCRIPTION

In the following the present invention will be described by means of exemplary embodiments. However, before turning to a description of some embodiments, at first some terms used in the following description are explained.
- CSIPTO: Coordinated SIPTO
- eNB: evolved NodeB (base station)
- ECGI: E-UTRAN Cell Global Identifier
- EPC: Evolved Packet Core
- L-GW: Local Gateway
- P-GW: Packet Data Network Gateway
- S-GW: Serving Gateway
- SIPTO: Selective IP Traffic Offload
- UE: User Equipment

According to one embodiment there is provided a method for assigning an IP address to a UE of a mobile network such that when the UE connects to a base station it gets assigned a "topologically correct" IP address. This means that the base station is connected to a backhaul network arranged in a certain physical topology, there is maintained for base stations in said mobile network a mapping between the physical location of a base station in the physical topology of said mobile network and a plurality of corresponding IP addresses, which may be assigned to a user equipment connected to said base station, and the base station in response to the connect request sends a reply containing an IP address derived by the base station based on said maintained mapping to said user equipment. In this manner the assigned IP address is "topologically correct".

According to one embodiment the request to connect, which may be an ATTACH request or a handover request, contains - either explicitly or implicitly - an indication that for the requested connection and the corresponding traffic no mobility support is required, even not desired. Then the entity receiving the ATTACH request or handover request understands that a topologically correct IP address should be assigned to the UE, and furthermore it understands that this address should also change according to the new location of the UE in case of a handover. The IP address allocation unit may then be contacted by the entity to provide such an IP address, or the entity has already a pool of such addresses, among which it can chose one. The connection will then be established in a way which enables this functionality.

As mentioned, the connect request can be an ATTACH request or a handover request. In both cases the request contains the "no mobility support" indication according to one embodiment. The request may further include a "best effort traffic" indication, either separately or implicitly included in the "no mobility support indication".

The IP address allocation unit (which may also be called "IP address allocator") maintains a mapping table, which maps locations to location dependent, topologically correct IP addresses. Thus it is possible to assign an IP address, which is location dependent in response to a connect request, which contains a location indication. The location indication can be transmitted explicitly by the connect request, or implicitly by some information contained in the connect request anyway, such as the eNB ID or the ECGI.

The IP address allocator can be a separate entity in the network, which has the task of maintaining the mapping table and returning an location dependent, topologically correct IP address in response to a request, or it may be integrated into a (modified) prior art network entity such as a S-GW or a P-GW, which then performs the functionality of the IP address allocator.

According to one embodiment the IP address allocator preconfigures a pool of IP addresses for one or more eNBs in the network and forwards this pool to them, respectively. The IP addresses are location dependent and thus topologically correct, and the eNB may then use this pool of addresses to assign a topologically correct IP address to a UE if necessary or if requested. The pool may be updated or increased on request by the eNB. In this manner an asynchronous IP address distribution can be achieved, which reduces signaling load during an ATTACH or handover request.

According to one embodiment the ATTACH procedure or the handover procedure, which is performed with no mobility support, in some sense "bypasses" the protocol stack of the conventional 3GPP procedures by not establishing a tunnel. Instead there is performed a direct mapping of the assigned IP address to the corresponding radio resource, thereby avoiding the need for tunneling, bearer establishment with QoS, TEID and all the corresponding signaling overhead, which is necessary in the conventional 3GPP ATTACH or handover procedures.

According to one embodiment the approach of the present invention makes use of existing entities and signaling procedures of the 3GPP network, however, with some slight modifications, namely:
a) a connect request contains an indication that "no mobility support" and/or "best effort traffic" is requested. This can be achieved by a slightly modified ATTACH or handover request containing this information
b) a request to assign a "topologically correct IP address" is forwarded to an IP address allocator or to the eNB, which has a preallocated pool of topologically correct addresses
c) the topologically correct IP address is returned to the UE which has made the request
d) the connection is established with a "reduced protocol stack", which avoids the tunneling and the QoS bearer establishment. In the base station, the topologically correct IP address is mapped directly to the radio resource for the requesting UE.

As mentioned before already, in the proposed network design approach neither gateways (i.e. S/PGWs) nor tunneling (i.e. EPS bearers) is needed. This is achieved according to one embodiment by assigning a new IP address to a UE whenever it changes its network attachment point (base station), let it be a connection to a base station in form of an "attach" procedure, or let it be a change of the base station during a "handover". With this, the IP address that a UE uses is "topologically correct", i.e. the IP address corresponds to the location of the UE in the operator's backhaul network. Thus, downstream packets for the UE can be routed in the backhaul network, without the need for tunneling.

To make this possible, according to one embodiment there is proposed a "connect procedure" which comprises a modified ATTACH or HANDOVER procedure, such that topologically correct addresses are assigned, and that no tunnels are established or maintained. For that purpose, an entity in the network holds a mapping table of "location -> IP address (pool)", such that requests for a topologically correct IP address (which is selected from the pool) can be correctly answered.

The proposed approach provides a number of advantages:
- Cost reduction for U-plane processing: a majority of the traffic can be served with routing functionality only. A tunneled solution needs the routing effort and the tunnel effort, in contrast. The invention removes S- and PGW and thus the associated costs: the amount of S- and P-GW capacity that an operator needs to provide can be reduced, resulting in lower capital and operational expenditures.
- Cost reduction for C-plane: compared to other solutions, the proposed signaling is more lightweight, resulting in less messages and thus less resources spent on processing such messages.
- More user data capacity: a packet that is transported in a tunnel requires additional headers. Thus, with tunneling, the amount of bytes a network transports contains "user bytes" as well as "tunneling bytes". By avoiding tunneling, the same network can transport more end user traffic with the same capacity.
- New service offering 1: According to one embodiment there is created a "no mobility, best effort option" for cellular networks, which allows a cellular network to provide a different service offering, which might be able to advantageously compete with WiFi, that has similar features but coverage disadvantages.
- New service offering 2: According to one embodiment there is enabled a new class of services. As there are no gateways any more, two UEs can communicate via a shortest path route in case they know each 'other's IP address. This can be beneficial e.g. in case of low latency applications that are a key target of 5G.

According to one embodiment there is provided an implementation of a "best effort, no mobility support" connection for UEs attached to a cellular network. There are several technical building blocks to achieve this:
- If a UE is attached to an eNB or performs a handover to an eNB, the IP address assigned to the UE corresponds to the location of this eNB in the backhaul network topology.
   ∘ Thus, downstream packets for the UE, e.g. arriving from the Internet, can be correctly delivered by simple routing in the backhaul based on the assigned IP address.
   ∘ Existing EPC signaling is adapted to assign topologically correct IP addresses upon attach. For that purpose a mapping table as explained above is provided.
   ∘ Existing EPC signaling is adapted to allow for changing the IP address upon handover. For that purpose, according to one embodiment a handover request signaling is - compared to the prior art - amended such that it additionally includes an indication that a new, topologically correct IP address should be assigned.
   ∘ An appropriate traffic mapping for downlink traffic arriving at the eNB based on the IP address that allows the eNB to assign the traffic to the right radio bearer/radio resources. In the prior art, i.e. in the 3GPP network, downlink traffic is mapped to radio bearers or radio resources based on the TEID (tunnel endpoint identifier). According to embodiments of the invention tunneling is not performed, and as the tunneling is not used, there is needed another means to determine which radio resources to use. For that purpose, according to one embodiment the IP address is used for this purpose, i.e. there is performed a mapping of the downlink traffic at the eNB to the radio resource/radio bearer based on the IP address assigned to the UE receiving the traffic.
- Valid for all two options, i.e. an IP address allocator which returns an IP address on request (option 1) and a preallocated IP address pool at the eNB (option 2):
   ∘ If the UE changes an eNB, its IP address changes as well.
   ∘ It is assumed that the problems that this will cause (downstream packets for this UE cannot be delivered anymore and might be lost, existing sessions are disrupted) are handled by the applications themselves via techniques like buffering or simply refetching the content, using the new IP address.
   ∘ No S- and P-GWs are needed and used. Packets are not tunneled, but routed.
   ∘ No QoS guarantees are provided.
   ∘ An appropriate traffic classification function in the UE in the form of an API that allows applications to request better traffic handling. The API allows to request a second, static IP address from the network on demand, with this steering the traffic according to its needs to either the "no mobility, best effort" or other connection.

According to embodiments of the invention, in case of a UE connects to an eNB, either by an attach procedure of by an handover, the UE gets an IP address that changes with every eNB it connects to:
- The assigned IP address is "topologically correct", i.e. it can be used to route the UE's packets in the backhaul network of the operator. Furthermore, the IP address might be even globally valid, i.e. can be used for routing purposes on the Internet, making NAT by the operator obsolete.

In the following there will be described in somewhat more detail a network architecture implementing embodiments of the invention.

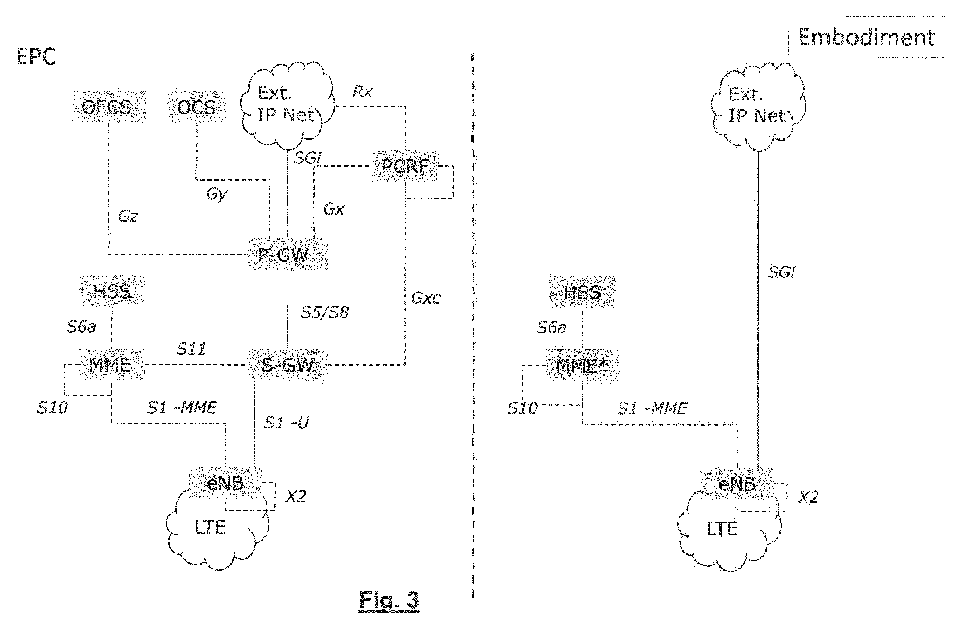

Fig. 3 illustrates a comparison of a prior art network architecture on the left-hand side and the approach according to an embodiment of the invention on the right-hand side. Fig. 4 illustrates a comparison of a prior art user plane stack on the left-hand side and the approach according to an embodiment of the invention on the right-hand side.

As shown in Fig. 3 and Fig. 4, according to one embodiment the S-GW and the P-GW are removed from the user plane. This allows the eNB to directly connect to packet data networks (PDNs) like the Internet. While there still may be provided a Gi-LAN holding such functions as firewall, NAT, or DPI, as shown on both sides of Fig. 4, the difference between the prior art approach (left-hand side) and the new approach (right-hand side) resides in the difference of the protocol stacks at the eNB. As can be seen there is no GTPU tunneling, and the S-GW and P-GW are in some sense "bypassed".

It should be noted that the architecture according to this embodiment still contains a modified version of the mobility management entity (MME*), the modification being indicated by the "*". From the functional point of view, this in some sense may be regarded as a misnomer, because the key idea of the disclosed invention is to not support mobility any more, and as such, there is therefore also no need to manage it. However, the modified MME (labeled in Fig. 4 as MME*) according to this embodiment performs authentication and authorization (AA) functions, which are still needed for this embodiment. Thus the MME* in some sense can be considered as a stripped down MME that still performs these AA functions, but does not need to manage mobility. For that purpose the MME*, if implemented by a "modified MME", may be signaled such that it should only provide AA functions but not mobility support, and then such a MME may perform both functions, the classical one according to the 3GPP procedure and the function of the MME*

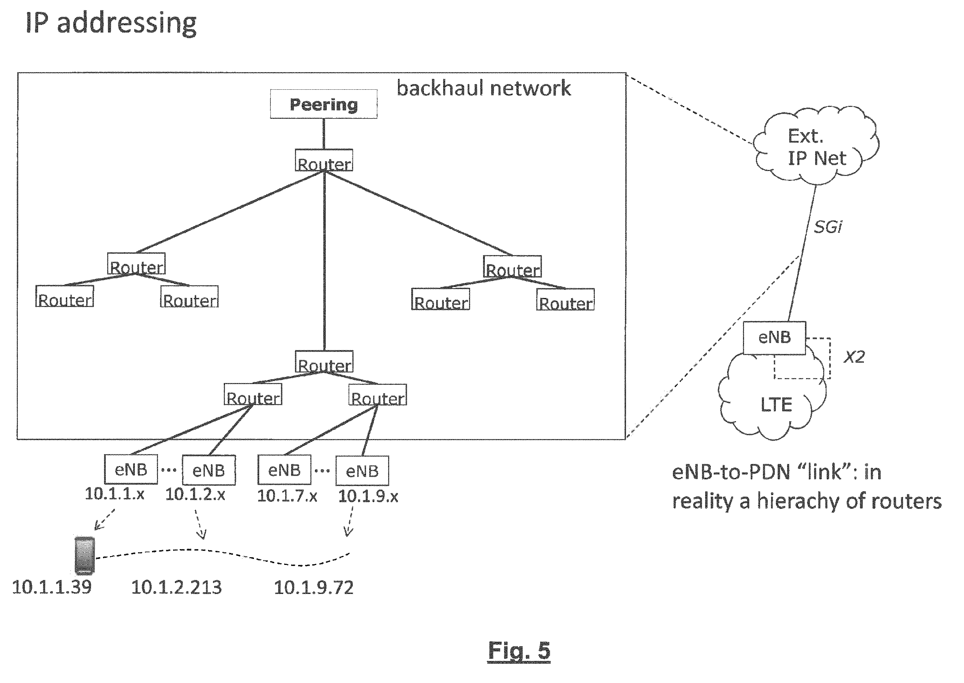

As shown in Fig. 5, according to embodiments of the invention the UE changes its IP address whenever it changes the base station it is attached to. Its IP address then is topologically correct, which means it correctly reflects its location within the operator's backhaul network due to the location of the eNB in this backhaul network, to which it is connected. The IP address then is routable in the operator's backhaul network, thereby removing the need for tunneling.

It should be noted here that according to one embodiment the UE gets assigned a topologically correct IP address, which means an IP address which is routable in the backhaul network of the operator to which the eNB is connected. According to one embodiment the IP address assigned to the UE is mapped onto a radio resource or a radio bearer, which then avoids the need for a tunnel and a TEID being created. Instead the traffic can be directly routed onto the radio resource using the assigned IP address.

According to embodiments of the invention, the signaling procedures defined by 3GPP are adapted such that topologically correct IP addresses are assigned. This will be explained in somewhat more detail in the following.

This will be in the following explained by means of an Attach procedure according to an embodiment of the invention.

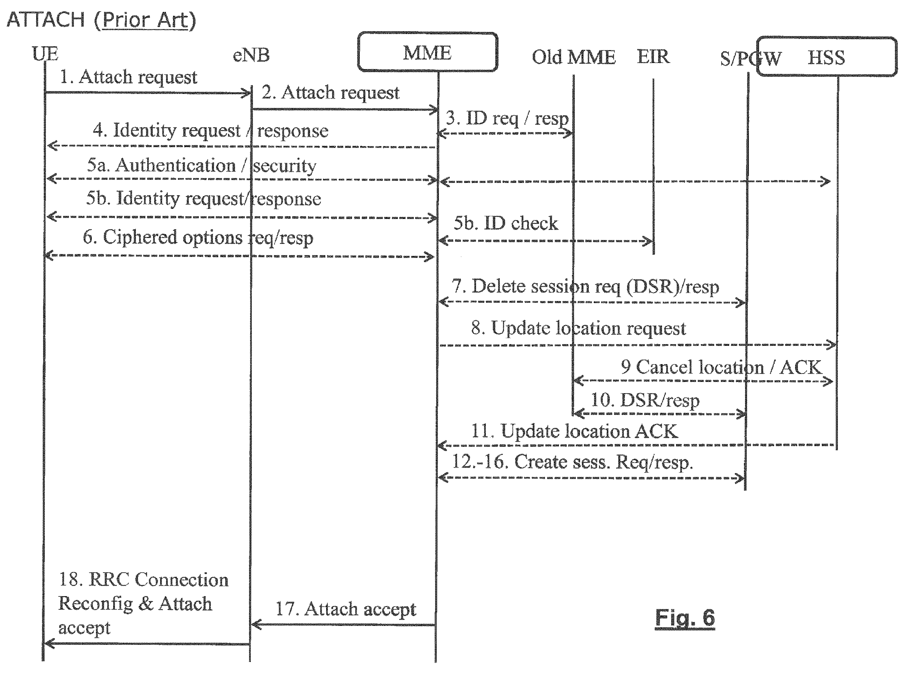

First, however, Fig. 6 shows the relevant parts of the prior art ATTACH procedure as defined in TS23.401 "GPRS enhancements for E- UTRAN access".

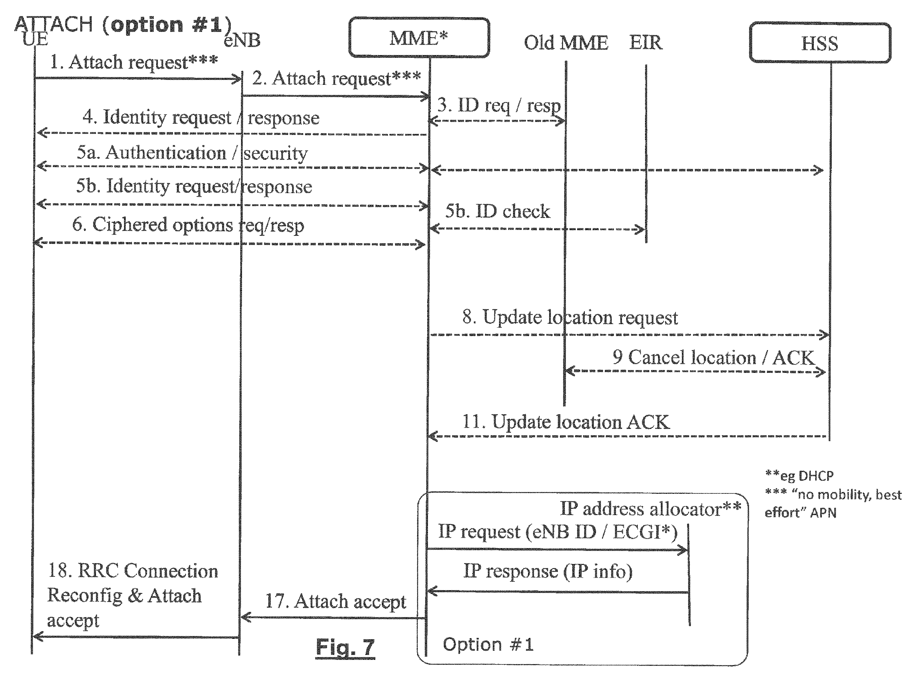

Fig. 7 shows the signaling for an embodiment of the invention according to a first option, where the IP address is centrally assigned by an entity called "IP address allocator". This entity is located somewhere in the network and is responsible for allocating IP addresses on request based on the location of the UE requesting the IP address or based on the location of the eNB to which the UE wants to attach. According to one embodiment there are the following changes compared with the existing 3GPP signaling:
- Step 1: during the "Attach request", the UE signals to the network that it wants to connect in a "no mobility, best effort" mode to the eNB providing such a connection. The attach request according to one embodiment contains an indication which enables the receiving eNB to recognize that the connection, which is requested, should be in the "no mobility, best effort" mode. According to one embodiment the indication may also just be an indication for "no mobility" without indicating "best effort". E.g. according to one embodiment best effort may also be a default setting for a connection requested with "no mobility" support. Moreover, there may be embodiments, where the connection later provides QoS support, however, on an IP level and not on the level of bearers as in 3GPP; thereby also avoiding the need for tunneling and SGW and P-GW. However, the attach request must either include or has to be preceded by or has to be succeeded by an indication that the connection should be a "no mobility support" connection, to enable the eNB to proceed with the attachment procedure accordingly. In the preferable embodiment the "no mobility support" indication is contained in the Attach request, either explicitly by one or more bits indicating it or implicitly, e.g. by default setting. In case of the later, however, also the Attach request should provide for the possibility of indicating "mobility support", which in turn then means that there should be one or more bits reserved in the Attach request for providing this indication. According to one embodiment the "no mobility support" indication signaled by the ATTACH request may contain an indication that the UE wants to connect to a specific "no mobility support" APN.
- Step 7, 10, 12-16: these steps are not necessary for this embodiment, as they are directed to the deletion and creation of states in the gateways for tunneling. Thus, these steps can be omitted in an Attach procedure with no mobility support and are thus removed from the signaling shown in Fig. 7.
- "IP request/response" (between step 16 and 17): this procedure requests an IP address for the UE, providing information on the current location of the UE (e.g. the identity of the base station or the cell the users is attached to). Based on this location information, the IP address allocator determines a suitable IP address. This IP address corresponds to the location of the UE and its base station in the operator's backhaul network. For this task, the IP address allocator holds a mapping table (not shown on the Figure) to derive a suitable IP address based on the location information provided in the "request" step. It contains entries of the form "location → IP address range" that indicate which IP addresses can be assigned depending on the current location of the UE. The IP address allocator might be built based on existing DHCP functionality, extended with the mapping table and signaling disclosed above.

It should be noted that the above embodiment is just one possible implementation of the concept of implementing a modification of the 3GPP which achieves "no mobility" support. In another implementation, e.g. it is possible to modify steps 12-16 (see Fig. 6) such that they provide the "IP request/response" feature described above. The signaling there already contains all the necessary parameters: both information on location in the request steps 12 and 13 (e.g. location information by means of the eNB ID and/or the ECGI), as well as the transmission of an assigned IP address in the return steps 15 and 16 (this is also returned in case of 3GPP, although a topologically not correct one which moreover in the 3GPP case is used for tunneling). In the case of using the existing signaling of 3GPP attach procedure without a separate IP request and IP response signal, however, according to one embodiment the following changes are applied compared to the prior art 3GPP signaling: 1) the request steps contains the indication that no bearers need to be created (i.e. an indication that "no mobility support is desired"), which can be achieved by forwarding the "no mobility support" indication or the "APN information" provided by the UE; 2) no bearers are established in the GWs; 3) the IP address returned is topologically correct by using the above outlined mapping table. Besides such changes to the signaling, it is necessary to hold in the P-GW a mapping table to derive a suitable IP address based on the location information provided in the "request" step. It contains entries of the form "location → IP address range" that indicate which IP addresses can be assigned depending on the current location of the UE.

Furthermore, from the conceptual point of view, having two different entities involved (S- and P-GW in case the signaling of the 3GPP is simply reused) is not necessary.

It will be recognized by the skilled person that the concept of a "no mobility support" attach procedure can be implemented either using a separate stand-alone IP address allocator as a separate and new entity not provided in the 3GPP system and as shown in Fig. 7 as "option 1", or it can be implemented using existing signaling and entities, which however are slightly modified to provide the needed functionality, for example by providing an entity such as S-GW and/or P-GW with functions of an IP address allocator as described above. In this case such a modified S-GW and/or P-GW on receiving an "IP request with a no mobility support indication" returns a topologically correct IP address retrieved from a mapping table maintained at some network entity, which maintains a mapping between IP addresses and locations.

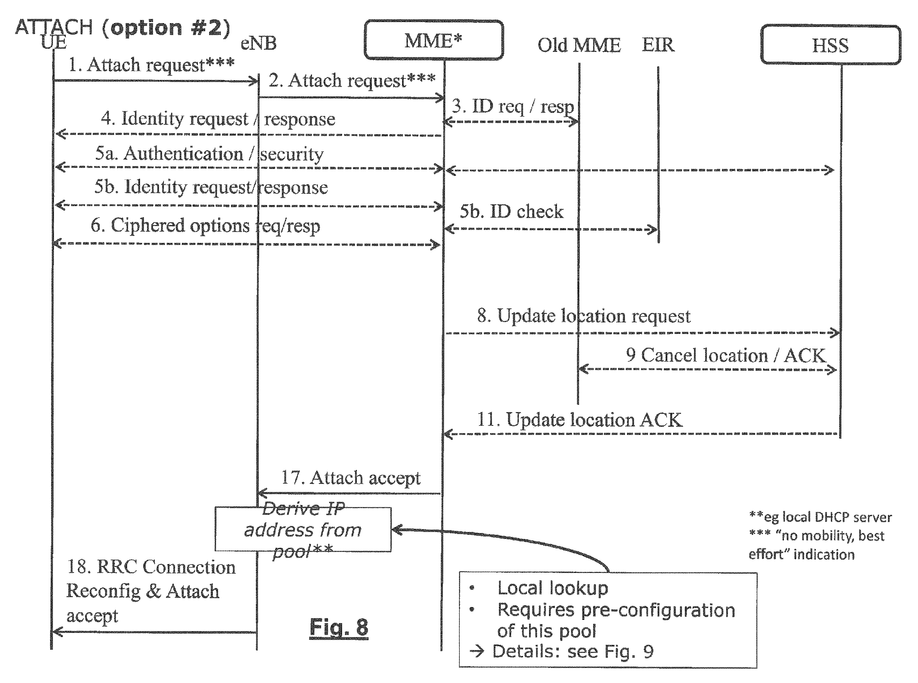

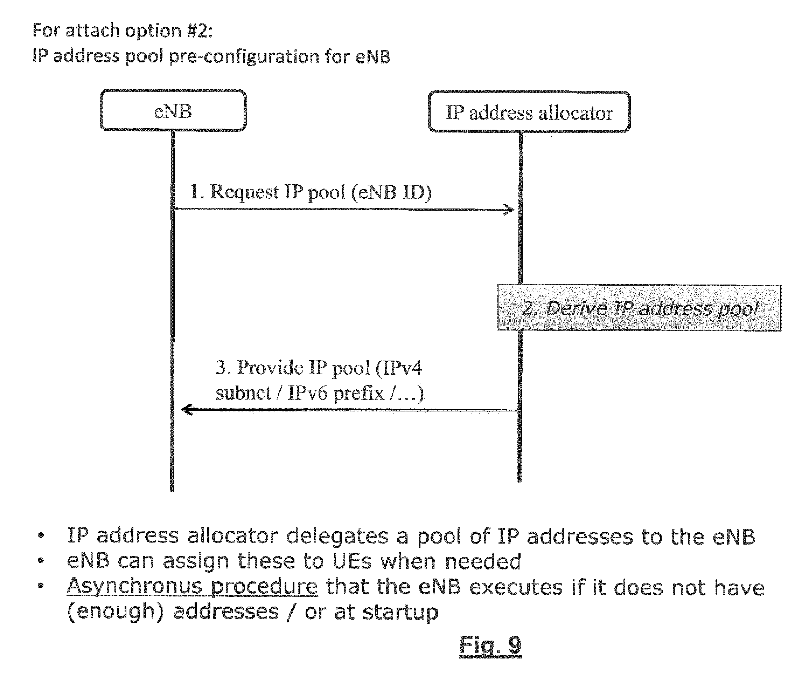

An even further embodiment will now be described in the following referring to Fig. 8. In this embodiment there is provided an eNB-local assignment of IP addresses. In this embodiment of the Attach procedure the base station (eNB) locally assigns the IP address for the UE. This requires a pool of IP addresses available to the eNB. According to one embodiment this pool is pre-configured as for example shown in Fig. 9, e.g. by requesting the addresses from an IP address allocator in a first step. The eNB requests this pool of topologically correct IP addresses from this IP address allocator, whereas this request contains an indication of the eNB identity. This identity can for example be a dedicated identity assigned to the eNB, or it can be the IP address that the eNB uses to communicate with other entities in the network. The IP address allocator holds in one embodiment a mapping of the form "eNB identity → IP address range" to derive a topologically correct IP address pool in a second step. In another embodiment of this second step, this IP address allocator holds the IP level routing configuration of the backhaul network. Based on this routing configuration, the IP address allocator derives the set of all IP addresses that the backhaul network in this configuration will route towards the eNB. From this set, a subset is derived as the pool of IP address routable towards the eNB. In a third step, the IP address allocator returns the derived IP address pool that can be an IPv4 subnet, an IPv6 prefix, or simply a collection of IP addresses to the eNB.
As illustrated in Fig. 9, the eNB has preassigned a pool of topologically correct IP addresses, from which it may choose an address as needed to assign it to an UE upon an ATTACH request. The topologically correct IP address is assigned if the ATTACH request contains a "no mobility support indication" as illustrated in Fig. 8 in step 2 "ATTACH***", otherwise the "normal" 3GPP Attach procedure is followed. If, however, the ATTACH request contains the "no mobility support" indication; the eNB in the procedure illustrated in Fig. 8 and 9 then assigns one of the addresses from the pool to the UE during the attach procedure.

As a general note it should be understood that if throughout the whole description there is mentioned a "no mobility support" indication, this equally also covers the case that the indication in fact is a "no mobility support/best effort" indication. The embodiments of the invention all have in common that the conventional 3GPP attach or handover procedures are modified such that alternatively to a "mobility support" mode which does not provide topologically correct IP addresses there is the possibility for a "no mobility support" mode, which does not provide mobility support (i.e. a constant, non-changing IP address irrespective of the location) but instead provides topologically correct IP addresses, during ATTACH and handover procedures. In this mode there may additionally be provided "best effort" traffic, however, this is not necessarily the case, since a "best effort mode" is not indispensably linked to the topologically correct IP addresses. In fact, there could be implemented QoS support on the IP level if desired. However, since according to embodiments of the invention the no "mobility support" mode discards the tunneling, which provides QoS at a bearer level, and the use of the S-GW and P-GW functions, which establish the tunneling, the "no mobility support" mode in some sense quite naturally comes along with a "best effort" mode, if the tunneling and the correspondingly established QoS support is not used but the corresponding layers of the protocol stack are "bypassed"/"omitted". It should therefore be understood that the terms "no mobility support indication" and "no mobility support mode" may at the same time encompass a "best effort mode" if the tunneling functions of S-GW and P-GW are not used and instead a direct mapping between radio resource and IP address of a UE is performed. It should further be understood that in this case still there may be QoS support, albeit not by means of tunneling at the bearer level but instead on the IP level using the QoS support parameters in the IP protocol.

Up to now, there have been described embodiments where a UE connects for the first time to a network, the so called attachment or ATTACH procedure. If a UE is already attached, but moves out of the radio range of a source base station, into the radio range of a target base station, a *handover* is performed to keep the UE connected. According to embodiments of the invention, this case also is covered, as the UE requires a new IP address because it will connect to the network via the new, target base station (eNB).

In the simplest form, a UE can re-execute the above described ATTACH procedure after a radio layer handover has been performed. This has the advantage to be very simple, as no new procedures are needed. On the downside, this means that the UE is not connected for a certain time and furthermore, this also puts a higher signaling load on network.

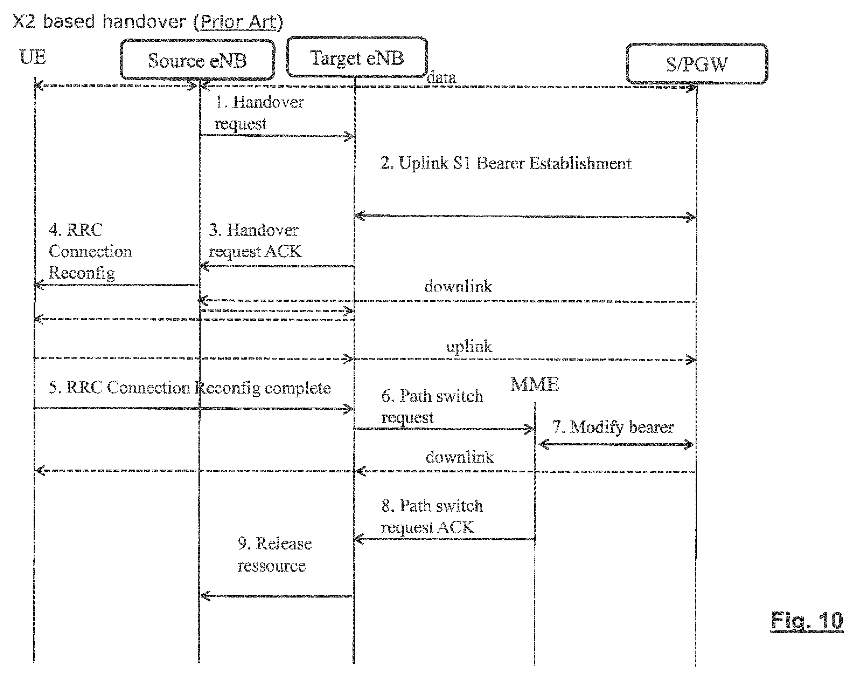

Therefore there are provided embodiments, which can avoid these downsides. However, before explaining them at first reference is made to Fig. 10. Fig. 10 shows a sequence diagram of a prior art 3GPP handover.

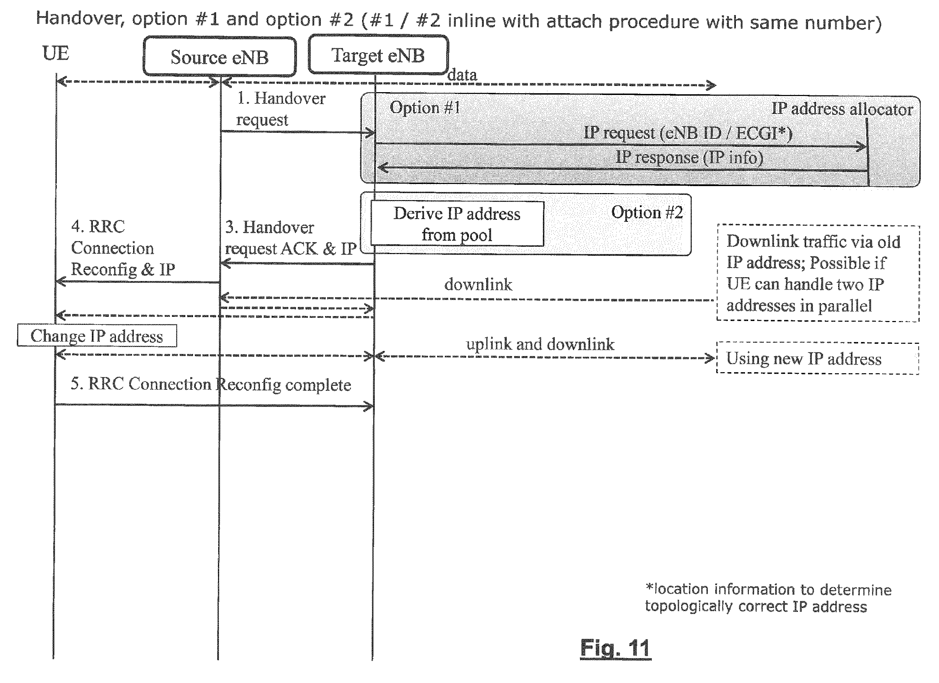

Fig. 11 shows how according to embodiments of the invention this prior art approach can be modified to implement a mobility mode with topologically correct IP addresses.

In Fig. 11, two variants are illustrated that are inline with the option 1 (IP address received from IP address allocator) and option 2 (IP address retrieved from a pool of preconfigured topologically correct IP addresses at eNB) outlined above. The detailed signaling flow for both options is shown in **Fehler! Verweisquelle konnte nicht gefunden werden..** According to the embodiments, differences to a prior art handover procedure are that a) a new IP address is derived by the target eNB between steps "1. Handover request" and "3. Handover request ACK", and b) that this new IP address is forwarded to the UE in steps "3." and "4." and the UE then changes the IP address. Just to remember: In the prior art the IP address does not change and therefore is not transmitted in steps 3 and 4.

Options 1 and 2 here show no major differences, just the way in which the new IP address is obtained either via an external IP address allocator, or local by a lookup in the local IP address pool.

It should, however, be noted that according to embodiments of the invention the handover request in step 1 of Fig. 11, albeit not shown in Fig. 11, should be modified compared with the prior art handover request of Fig. 10 in such a way that it comprises a "no mobility support" indication to thereby enable the topologically correct IP address to be retrieved, which then can be assigned to the UE.

The major advantage of this embodiment of a handover procedure (compared to the initially discussed re-execution of the ATTACH procedure) is speed: the UE is not disconnected from the network, because as soon as the handover has been performed on the radio layer, the UE can transmit and receive again packets (albeit with a new IP address).

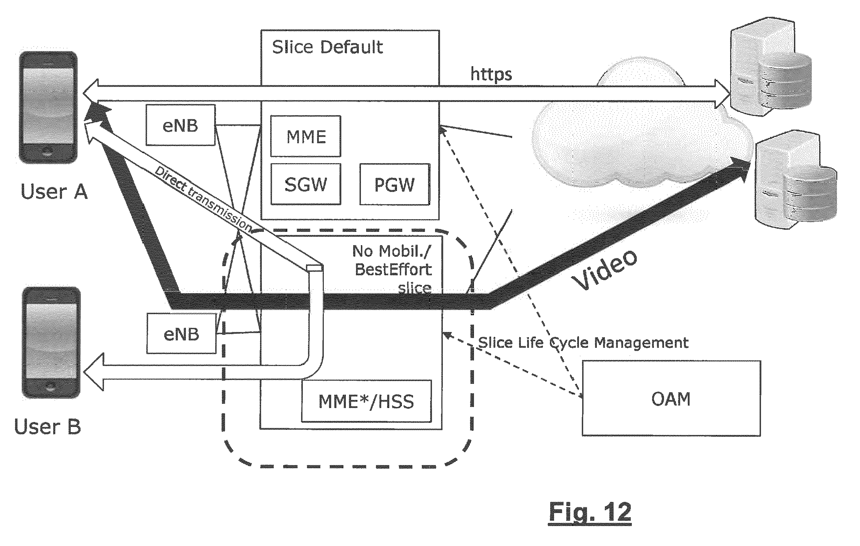

With the embodiments described so far there can be implemented a new paradigm of network design and traffic handling based on the prior 3GPP approach by implementing additionally the extensions and/or modifications suggested by the embodiments of the invention. This will be now explained in somewhat more detail by referring to Fig. 12.

Fig. 12 illustrates how the overall system design of a network integrates the embodiments of the invention as an "additional slice" so that there is an additional network slice for "no mobility support/best effort traffic". Such "best effort, no mobility support" traffic makes up a large fraction of mobile network traffic. An overall system design as shown in Fig. 12 can support such traffic and also the remaining traffic.

In such a design there could also be implemented a paradigm shift for mobile networks. Currently, the default connection ("default bearer") supports tunneling and with this mobility. As outlined above, however, this is not needed for a majority of the traffic. Thus, the default connectivity provided to a UE when it attaches to the cellular network may be set to only support "best effort, no mobility support" traffic instead. Only if needed (e.g. for more demanding traffic types like VoIP or https), an additional, "mobility+QoS"-supporting connection is used. According to one embodiment two IP addresses are assigned to the UE for this: the packets for the first, default IP address are handled as described in the embodiments above without mobility support and using best effort traffic; the packets for the second IP address can be handled via tunneling through an EPC network.

In this embodiment the UE requests the activation of this better connectivity from the network on demand, and the network provides another, second IP address to the UE. This IP address will not change in case of mobility and is maintained by tunneling packets from mobility anchors (S-GW and P-GW) to the eNB, thus following today's EPC model. This on demand activation can be achieved by involving the UE and the application. To this end, according to one embodiment an API is provided by the operating system of the UE to application programmers to request better connectivity for an application. When the API is called with an indication that the application needs such a better connection, the UE reaches out to the network such that the network makes the necessary configurations in form of setting up bearers as in current EPC and based on this provides the second IP address. The application that has requested this better connectivity and thus this second, static IP address then transmits all its packets using the static IP address. Once the application terminates, it makes an API call and the bearer can be teared down again.

A second option is that according to one embodiment the network provides the UE with two IP addresses right during the ATTACH procedure: one topologically correct one, and another one that is static and does not change.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a computing device or a mobile phone or any mobile device or network entity, which is suitably programmed such that it is able to carry out a function as described in connection with the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

## Claims

1. A method for assigning an IP address to a user equipment of a mobile network, said method comprising:
Sending a request to connect said user equipment to a first base station of said mobile network, wherein said first base station is connected to a backhaul network arranged in a certain physical topology;
maintaining for base stations in said mobile network a mapping between the physical location of a base station in the physical topology of said mobile network and a plurality of corresponding IP addresses, which may be assigned to a user equipment connected to said base station;
sending from said first base station a reply containing an IP address derived by said first base station based on said maintained mapping to said user equipment.

2. The method of claim 1, wherein said request to connect comprises information that indicates that said assigned IP address should be assigned based on said mapping.

3. The method of claim 1 or 2, wherein wherein said request to connect comprises information that indicates that the connection should be made in a mode which does not maintain mobility support such that the IP address assigned to the user equipment will change during a handover.

4. The method of claim 1, 2 or 3, wherein
said request is a handover request which is sent from a second base station requesting a handover of said user equipment from said second base station to said first base station; and said reply containing an IP address is sent from said first base station to said second base station, which then forwards said IP address to said user equipment.

5. The method of one of claims 1 to 4, wherein said IP address is derived by sending from said first base station a signal to an IP address allocation unit, the signal containing location information such as the identifier of said first base station or the cell to which said user equipment is going to connect to, wherein
the IP address allocation unit is configured to maintain a mapping of said location information to a set of IP addresses it can assign to said location identified by said location information; selecting one of these IP addresses as said IP address to be assigned to said user equipment; transmitting from said IP address allocation unit said IP address to said first base station.

6. The method of one of the preceding claims, wherein
said IP address is derived by: Based on a pre-allocated pool of IP addresses allocated to said first base station, said pool containing only IP addresses corresponding to the physical location of said first base station in said physical network topology;
upon receiving the request for an IP address by said first base station, returning an IP address from said pool.

7. The method of any of the preceding claims, further comprising:
classifying by a traffic classification function in said user equipment a part of or all traffic produced by this UE as best effort traffic;
forwarding only the traffic, which has been classified as best effort traffic, using the IP address, which has been assigned based on the location information.

8. The method of any of claims 4 to 7, further comprising:
when said user equipment receives said IP address from said second base station, changing an existing IP address to said newly assigned location dependent IP address;
transmitting all packets using said newly assigned location dependent IP address;
sending a handover complete message to said second base station.

9. The method of any of the preceding claims, further comprising:
sending information in said connect request sent from said user equipment or in said handover request to said first base station indicating that said user equipment wants to connect in a "best effort traffic" and "location dependent IP address" mode.

10. The method of any of the preceding claims, further comprising:
after the UE has obtained an IP address, the sending by the UE uplink packets towards the base station which are then routed via said backhaul network without GTP tunneling using IP routing, and/or
after the UE has obtained an IP address, the receiving by the UE downlink packets from the base station which are then routed via said backhaul network without GTP tunneling using IP routing.

11. The method of any of the preceding claims, further comprising:
Assigning to the UE that attaches to the first base station two IP addresses, one that is location dependent and changes during a handover for best effort traffic, and a different one that is stable during handover.

12. The method of any of the preceding claims, further comprising:
Providing an interface on the UE for requesting 'stable IP address' and/or 'more than best effort' traffic;
assigning in response to such a request an additional IP address by the network to the user equipment, which remains the same in case of a handover and/or activation of QoS bearers.

13. The method of any of the preceding claims, wherein the base station uses the IP address of arriving downlink packets rather than a tunnel endpoint identifier to map these packets to a dedicated radio bearer.

14. The method of any of the preceding claims, further comprising:
a. Forwarding an attach request sent from said user equipment to said first base station to an "authentication and authorization" (AA) unit,
b. said AA unit determining that said user equipment is subscribed to a "best effort, no mobility support" mode;
c. triggering the derivation of the location dependent IP address by said base station.

15. An apparatus for assigning an IP address to a user equipment of a mobile network, said apparatus comprising:
a module for sending a request to connect said user equipment to a first base station of said mobile network, wherein said first base station is connected to a backhaul network arranged in a certain physical topology;
a module for maintaining for base stations in said mobile network a mapping between the physical location of a base station in the physical topology of said mobile network and a plurality of corresponding IP addresses, which may be assigned to a user equipment connected to said base station;
a module for sending from said first base station a reply containing an IP address derived by said first base station based on said maintained mapping to said user equipment.

16. The apparatus of claim 15, further comprising:
one or more modules for performing the method as defined in one of claims 2 to 14.
